# DEMANDE DE BREVET EUROPEEN

(11) **EP 2 354 701 A2**
(43) Date de publication de la demande: **10.08.2011**
(21) Numéro de dépôt: 11151152.3
(22) Date de dépôt: 17.01.2011
(51) Int. Cl.: F24H 1/22, F24H 8/00, F24F 3/14, F28D 21/00, B01D 61/36

(54) **Dispositif et procédé améliorés de récupération de chaleur dans un gaz contenant de la vapeur d'eau**

(30) Priorité: 21.01.2010 FR 1050409
(71) Demandeur: Pyraine, 33600 Pessac (FR)
(72) Inventeur: Ecalle, Olivier, 33000 Bordeaux (FR)
(74) Mandataire: Texier, Christian

(57) **Abrégé**

L'invention concerne un dispositif (20) de récupération de chaleur dans un gaz contenant de la vapeur d'eau, le gaz circulant dans un conduit (11), comprenant :
- un circuit principal (21) de solution (s) hygroscopique,
- un moyen (23) d'injection liquide depuis le circuit principal (21) vers le conduit (11), de sorte que la solution (s) hygroscopique se dilue en absorbant la vapeur d'eau du gaz circulant dans le conduit (11),
- un moyen (24) d'extraction liquide depuis le conduit (11) vers le circuit principal (21), de sorte que la solution (s) hygroscopique est injectée dans le circuit principal (21) après absorption de la vapeur d'eau ;
- un moyen (22) de régénération de la solution (s) hygroscopique disposé sur le circuit principal (21) ;
le dispositif étant caractérisé en ce qu'il comprend un moyen (30) de transfert de chaleur surbaissant la température de la solution hygroscopique (s) concentrée avant injection

L'invention concerne également un procédé à cet effet.

## Description

La présente invention concerne un dispositif amélioré de récupération de chaleur dans un gaz contenant de la vapeur d'eau.

Plus précisément, elle concerne un dispositif de récupération de la chaleur latente contenue dans la vapeur d'eau de gaz chauds et humides, par exemple dans les fumées de combustion d'une chaudière ou l'air d'un circuit de séchage.

### ETAT DE L'ART

Une installation de chauffage comprend de façon connue une chaudière alimentée en combustible du type combustible fossile, gaz, fioul ou bois qui assure le chauffage d'un fluide caloporteur.
La combustion dans la chaudière est optimisée et on sait que la quasi intégralité du pouvoir calorifique inférieur (PCI) du combustible est extrait, pour un rendement d'environ 95%.
Par contre, durant la phase de combustion, de l'eau sous forme de vapeur est émise, elle véhicule ce que l'on appelle de la chaleur latente. En effet pour passer de l'état liquide à l'état gazeux, un corps nécessite un apport d'énergie, l'enthalpie de changement d'état. Une part non négligeable du pouvoir calorifique supérieur (PCS), c'est-à-dire l'énergie totale libérée par la combustion, est donc en réalité utilisée pour vaporiser les produits, c'est la chaleur latente, par opposition à la chaleur sensible.
Cette énergie est habituellement perdue lorsque les fumées de combustion sont rejetées. Et elle représente en fait près de 12% du pouvoir calorifique supérieur du combustible entrant dans la chaudière considérée dans le cas d'une combustion au gaz naturel. Parvenir à la récupérer serait très intéressant, autant d'un point de vue économique que d'un point de vue écologique. Les carburants fossiles sont en effet couteux et émetteurs de dioxyde de carbone, et vont en se raréfiant.
Divers dispositifs ont été proposés à cet effet. On peut citer les pompes à chaleur, qui possèdent l'inconvénient de nécessiter un système mécanique de compression. Elles consomment donc de l'énergie électrique, qui reste chère. Il faut rajouter qu'à cause de ces systèmes mécaniques, elles s'usent et possèdent donc une durée de vie relativement courte.
Selon une variante connue, on peut remplacer la compression mécanique par une étape de chauffage d'une solution absorbante tout en gardant l'étape de détente basse pression, la machine à absorption ainsi définie possédant de meilleures performances. Une telle machine est décrite dans la demande de brevet GB2180058.
Néanmoins, l'un comme l'autre de ces dispositifs présentent des inconvénients et sont en particulier très chers à l'investissement, essentiellement à cause de leur complexité et du vide très poussé qu'ils nécessitent.
Le dispositif le plus abouti actuellement est la machine à absorption en cycle ouvert, décrite par exemple dans le brevet EP0857923. L'idée est de récupérer la chaleur latente par contact direct avec une solution hygroscopique. Cette solution est absorbante, et est injectée à contre courant dans un conduit dans lequel circule la vapeur d'eau de gaz chauds et humides. Elle se dilue en collectant de la vapeur d'eau et emmagasinant de l'énergie, et est récupérée à la base du conduit. Un dispositif appelé le désorbeur permet de régénérer la solution en la chauffant. La vapeur absorbée y est libérée et va transmettre sa chaleur latente à un moyen de valorisation de l'énergie grâce à un condensateur.
Ce dispositif a prouvé son efficacité, mais ne donne pas entière satisfaction. Tout d'abord il est nécessaire de consommer de l'énergie pour alimenter le désorbeur. Cette part ampute le rendement du dispositif. D'autre part il ne permet de récupérer qu'une partie de la chaleur latente. En effet, on observe qu'en sortie du conduit dans lequel est injectée la solution hygroscopique, le gaz a encore une température d'environ 60°C avec un point de rosée d'environ 35-40 °C. Ce point correspond à la température en dessous de laquelle la vapeur d'eau commence à se condenser, et s'abaisse au fur et à mesure que le gaz s'assèche. Il est donc possible de récupérer davantage d'énergie.

### PRESENTATION DE L'INVENTION

L'invention propose de pallier à cette limitation des dispositifs existants et en améliorer sensiblement le rendement, en proposant un dispositif de récupération de chaleur dans un gaz contenant de la vapeur d'eau, le gaz circulant dans un conduit, comprenant :
- un circuit principal de solution (s) hygroscopique ;
- un moyen d'injection liquide depuis le circuit principal vers le conduit, de sorte que la solution hygroscopique se dilue en absorbant la vapeur d'eau du gaz circulant dans le conduit ;
- un moyen d'extraction liquide depuis le conduit vers le circuit principal, de sorte que la solution hygroscopique est injectée dans le circuit après absorption de la vapeur d'eau ;
- un moyen de régénération de la solution hygroscopique disposé sur le circuit principal ;
le dispositif étant caractérisé en ce qu'il comprend un moyen de transfert de chaleur surbaissant la température de la solution hygroscopique concentrée avant injection.

Le dispositif selon l'invention est avantageusement complété par les caractéristiques suivantes, prises seules ou en une quelconque combinaison techniquement possible :
- le moyen de transfert de chaleur transfère à la solution hygroscopique diluée la chaleur absorbée sur la solution hygroscopique concentrée ;
- le moyen de transfert de chaleur met en prise le circuit principal et un circuit d'eau pure ;
- le circuit d'eau pure recycle l'eau fournie par le moyen de régénération ;
- le moyen de transfert de chaleur comprend un évapo-absorbeur basse pression ;
- le moyen de transfert de chaleur comprend un absorbeur à membranes de distillation ;
- ledit absorbeur à membranes de distillation est constitué de canaux alternés de solution hygroscopique et d'eau séparés par des membranes de distillation, les deux fluides étant injectés en sens contraire ;
- il comprend un échangeur supplémentaire mettant en prise la solution concentrée, et l'eau pure froide en sortie du moyen de transfert de chaleur ;
- les moyens d'injection comprennent un injecteur principal et un injecteur auxiliaire, seule la solution hygroscopique passant par ledit injecteur auxiliaire étant refroidie par le moyen de transfert de chaleur ;
- ledit injecteur auxiliaire est situé en aval de l'injecteur principal selon le sens de circulation du gaz dans le conduit.

L'invention présente de nombreux avantages. En obtenant une température d'injection de solution hygroscopique artificiellement inférieure à la température minimale du réseau à chauffer, on peut atteindre une température de sortie du gaz et un point de rosée d'autant plus bas, et accroitre la récupération de chaleur latente.
En outre, la solution hygroscopique diluée est envoyée plus chaude dans le désorbeur, c'est-à-dire le système permettant de régénérer la solution hygroscopique en la chauffant. Il y a donc moins d'énergie à fournir pour régénérer cette solution.
Ce transfert de chaleur entre deux parties du circuit de solution s'effectue de plus sans consommation particulière d'énergie. En effet le dispositif selon l'invention valorise l'eau libérée par le désorbeur, qui dans les dispositifs d'art antérieur était jetée à l'égout après avoir transmis son énergie via le condensateur.

L'invention propose également un procédé de récupération de chaleur dans un gaz contenant de la vapeur d'eau, le gaz circulant dans un conduit, le procédé étant caractérisé en ce qu'il comprend les étapes de :
- refroidissement de la solution hygroscopique par un moyen de transfert de chaleur ;
- injection d'une solution hygroscopique refroidie dans le conduit, de sorte que la solution hygroscopique se dilue en absorbant la vapeur d'eau du gaz circulant dans le conduit ;
- extraction de la solution (s) hygroscopique depuis le conduit ;
- préchauffage de la solution hygroscopique avec la chaleur absorbée lors de la première étape par le moyen de transfert de chaleur ;
- chauffage de la solution hygroscopique préchauffée au niveau d'un moyen de régénération, de sorte que de la vapeur d'eau s'évapore dans un conduit d'évacuation ;
- condensation de la vapeur d'eau au niveau d'un condenseur mettant en prise le conduit d'évacuation et des moyens de valorisation de chaleur.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 est un schéma d'un dispositif connu de récupération de chaleur dans les fumées d'une chaudière ;
- la figure 2 est un schéma du moyen d'abaissement de température de la solution hygroscopique du dispositif de récupération de chaleur selon l'invention;
- la figure 3 est un schéma d'un absorbeur à membranes de distillation utilisé dans un mode de réalisation de l'invention ;
- la figure 4 est un schéma d'un dispositif complet de récupération de chaleur selon un mode de réalisation particulièrement préféré de l'invention.

Sur les différentes figures, les éléments similaires portent les mêmes références numériques, et les valeurs de températures indiquées sont uniquement à titre d'exemple non limitatif.

### DESCRIPTION DETAILLEE

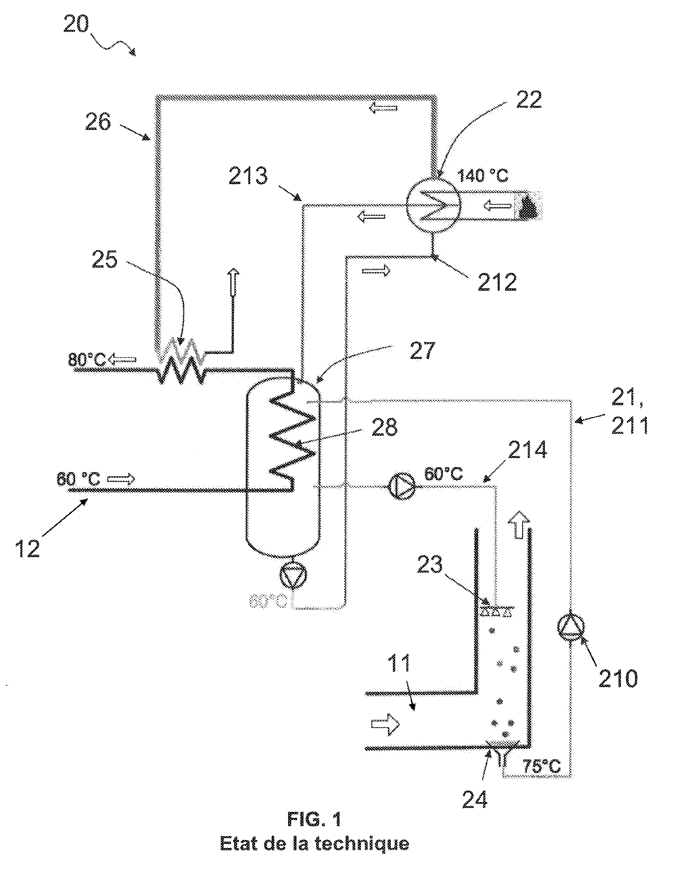

Le dispositif 20 de récupération de chaleur par solution hygroscopique selon l'invention comprend des éléments repris de l'art antérieur, dont un exemple de dispositif est représenté figure 1.
Le dispositif 20 est bâti autour d'un circuit 21 pour la circulation d'une solution s hygroscopique. En cas d'incertitude, ce circuit sera désigné en tant que circuit principal du dispositif 20.
La solution s est constituée d'un élément hygroscopique, que l'on désignera par le terme général de « sel », dissout dans l'eau. Par exemple, de manière non limitative, s peut être une solution aqueuse de chlorure de calcium, de bromure de lithium, de chlorure de lithium ou de triéthylène glycol. Ces éléments présentent une grande affinité avec l'eau. En conséquence, ils absorbent de la vapeur d'eau à une température supérieure à celle à laquelle la vapeur se condenserait normalement (point de rosée). Symétriquement, ces solutions bouillent à une température supérieure à celle de l'eau pure. A titre indicatif, pour une solution à 50 % massique de chlorure de calcium dans de l'eau, la courbe "température d'ébullition en fonction de la pression", est décalée d'une vingtaine de degrés par-rapport à l'eau pure.

Cette solution est injectée depuis la branche 214 du circuit 21 vers le conduit 11 via un moyen 23 d'injection liquide, par exemple un brumisateur qui la pulvérise dans le conduit 11, le plus souvent à contre-courant du gaz circulant dans ce conduit 11 pour une meilleure absorption. Elle se dilue donc en absorbant la vapeur d'eau du gaz. La chaleur contenue dans le gaz sous forme de chaleur latente de la vapeur d'eau et de chaleur sensible est ainsi transférée dans la solution qui chauffe tandis que le gaz se refroidit.

La solution s diluée, porteuse de la chaleur extraite par absorption de la vapeur d'eau dans le gaz, est alors réinjectée dans le circuit 21, plus précisément dans la branche 211, depuis le conduit 11 grâce à un moyen 24 d'extraction liquide, qui peut simplement être une bonde.
Le dispositif 20 comprend également un moyen 22 de régénération de la solution s disposé sur le circuit 21. Il s'agit préférentiellement d'un bouilleur, dans lequel la solution s diluée, apportée via la branche 212, est chauffée par un apport calorifique de sorte que l'eau absorbée dans le gaz s'évapore à haute température dans un conduit 26. En sortie du bouilleur 22, dans la branche 213, la solution s est à nouveau concentrée.
L'apport calorifique au niveau du bouilleur 22 est avantageusement réalisé par un générateur de vapeur, l'apport calorifique étant adapté pour que toute l'eau absorbée par la solution s1 dans le conduit 11 s'y évapore.
L'organe central du circuit 21 est un ballon tampon 27 dont le rôle est de stocker la solution hygroscopique s. Il peut contenir un échangeur 28 en prise avec des moyens 12 de valorisation de chaleur. Par mise en prise, on comprendra mise en communication thermique, afin d'échanger de la chaleur d'un milieu à l'autre Cet échangeur 28 permet de redonner et valoriser l'énergie fournie par le bouilleur 22 tout en régulant la température de la solution s typiquement à 60°C. En sortie de ce ballon 27, la circulation de la solution s entre les différents organes du circuit 21 est assurée par exemple par des pompes liquides 210.
Dans le même temps, le conduit 26 d'évacuation de vapeur d'eau partant du bouilleur 22 conduit à un condenseur 25 mettant en prise le conduit 26 et les moyens 12 de valorisation. La vapeur d'eau à haute température se condense. Sa chaleur latente est ainsi transférée aux moyens 12 de valorisation de chaleur déjà alimentés en énergie par l'échangeur 28 du ballon.

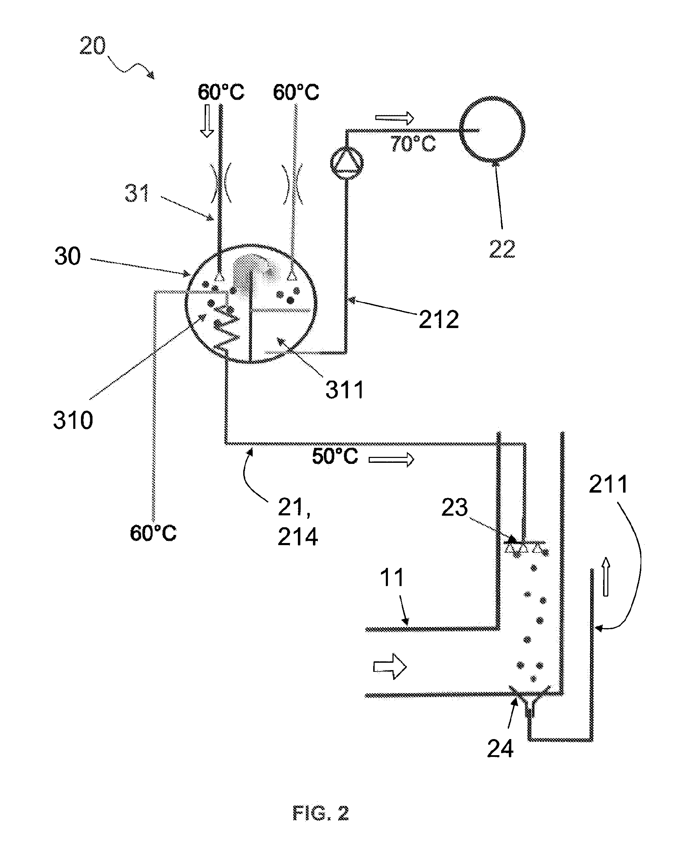

Le dispositif 20 selon l'invention comprend en outre un moyen 30 de transfert de chaleur qui vient se greffer sur le circuit 21 comme représenté sur la figure 2. Sa fonction principale est de surbaisser la solution s hygroscopique qui circule dans la branche 214 avant qu'elle ne soit injectée dans le conduit 11. En effet, le circuit présente une température minimale, qui est celle en entrée des moyens de valorisation 12. Grâce aux échangeurs 25 et 28, il est possible de refroidir la température de la solution s jusqu'à ce seuil (60°C dans cet exemple) mais pas plus bas. En surbaissant la température de la solution s, on entend atteindre une température inférieure à cette limite. Sur le fragment de circuit de la figure 2, la solution s concentrée rentre ainsi à 60°C dans le système 30, et en sort à une température inférieure, environ 50°C. Ces 10°C sont autant d'énergie qu'il sera possible de récupérer en plus dans le gaz circulant dans le conduit 11.
Préférentiellement, l'énergie absorbée à la solution s est transmise à une autre branche du circuit, la branche 212 qui amène la solution s diluée au bouilleur 22. Elle voit sa température augmenter des 10°C perdus par la solution s concentrée, et est à 70°C en entrée de bouilleur. Sachant que la température nécessaire pour régénérer la solution s est de 100 à 140°C, une partie de l'énergie à fournir par le bouilleur est économisée grâce à l'invention. Cela permet non seulement une réduction de consommation, mais aussi des économies d'investissement, puisqu'un bouilleur moins puissant est requis.
Pour permettre cette transmission d'énergie sans consommation supplémentaire, le moyen 30 de transfert de chaleur est en fait un échangeur particulier, en ce qu'au lieu de réduire l'écart de température entre deux fluides, il va l'augmenter. Avantageusement, il met en prise c'est-à-dire en situation d'échange thermique, le circuit 21 de solution s ainsi qu'un circuit 31 d'eau pure. Cette eau va être le vecteur de transfert de la chaleur grâce à des vaporisations/condensations successives.

Dans un premier mode de réalisation, qui est celui représenté sur la figure 2, le moyen 30 est un évapo-absorbeur basse pression. Il est composé de deux chambres dans lesquelles règne un vide poussé, par exemple 0.03 bars. La première chambre 310 contient la solution à refroidir, ici la solution s prête à être injectée dans le conduit 11. De l'eau provenant du circuit 31 y est injectée. Sous l'effet de la faible pression, elle se vaporise instantanément, absorbant la chaleur de la solution. La vapeur d'eau gagne l'autre chambre 311, où elle est absorbée par la solution hygroscopique s injectée à la même température, libérant toute l'énergie absorbée dans la première chambre.
Néanmoins, un évapo-absorbeur est contraignant à utiliser à cause des problèmes d'étanchéité.

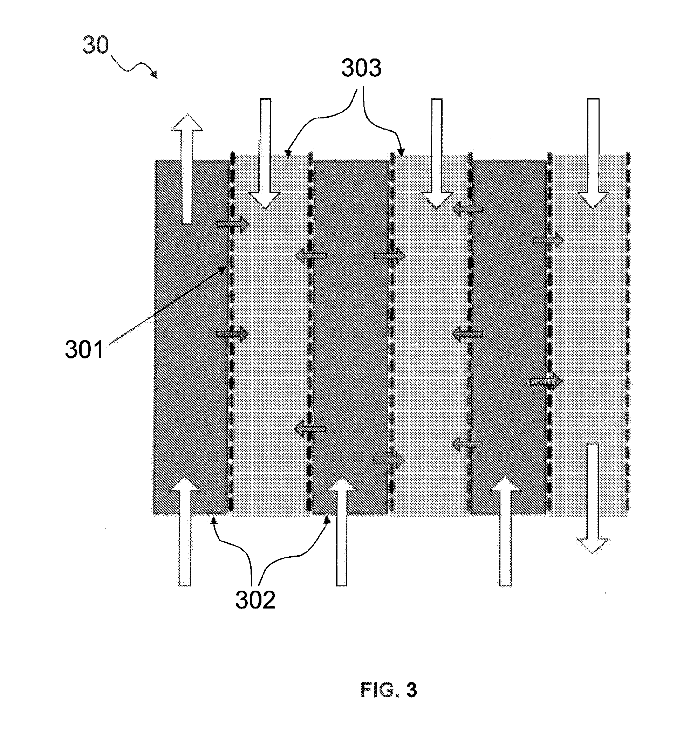

C'est pourquoi l'invention propose, dans un mode de réalisation préféré, d'utiliser un absorbeur à membranes de distillation, représenté sur la figure 3. Ces membranes 301 ont la propriété d'être à la fois hydrophobes (donc ne laissant pas passer l'eau liquide) et perméables à la vapeur d'eau. L'exemple le plus connu d'un de ces matériaux pouvant constituer ces membranes est le Gore-Tex® commercialisé par W. L. Gore & Associates. Ce tissu, à base de tétrafluorure d'éthylène étiré, possède 1,4.10⁹ nanopores au centimètre carré, chacun ayant un diamètre d'environ 0,2 micromètres. Ils sont donc 20 000 fois plus petits qu'une goutte d'eau mais 700 fois plus grands qu'une molécule d'eau seule. La vapeur d'eau, constituée de molécules fortement distantes les unes des autres n'a aucun mal à passer, au contraire des gouttes d'eau tenues par tension superficielle.
En séparant deux fluides par une telle membrane 301, le plus humide laisse « transpirer » son eau, qui se vaporise (production de froid), traverse la membrane, et se recondense (production de chaud). Avantageusement, l'échange se fait directement entre l'eau pure du circuit 31 et la solution hygroscopique s du circuit 21. La structure préférée pour l'échangeur est une alternance de canaux parallèles 302 et 303, dans lesquels circulent respectivement l'eau pure et la solution hygroscopique s. Un différentiel de température apparaît entre les deux fluides entrant chacun initialement à 60°C par le passage de vapeur d'eau. Avantageusement, ils sont injectés à contre courant, ainsi bien que les fluides sortent avec 20°C d'écart (50°C pour l'eau et 70°C pour la solution s), cet écart ne concerne que les deux extrémités de l'absorbeur, et deux points voisins séparés seulement par la membrane auront au maximum 10°C d'écart. Les pertes par conductivité thermique au travers de la membrane, qui tendent à égaliser les températures des fluides, seront limitées.
Cependant, on obtient donc de la solution s chaude prête à être envoyée au bouilleur 22 et de l'eau froide, mais pas encore de solution s froide à destination des fumées. Il est donc nécessaire d'utiliser un échangeur 32 supplémentaire pour transférer le froid de l'eau à cette partie de la solution s.

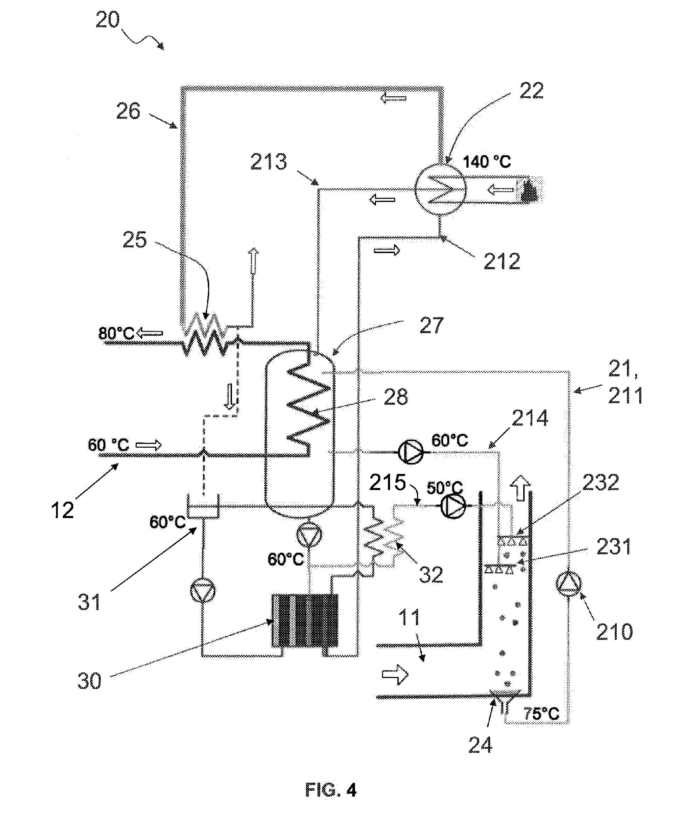

Cet échangeur ainsi qu'une architecture particulièrement préférée du dispositif 20 de récupération de chaleur selon l'invention, sont représentés figure 4. Le circuit 31 d'eau est alimenté par l'eau provenant du condensateur 25 initialement rejetée. Cette eau est produite par évaporation puis recondensation et est donc parfaitement pure. C'est donc le fluide idéal pour alimenter l'absorbeur à membranes. Dans les dispositifs selon l'art antérieur, elle est généralement évacuée dans un réseau d'eaux usagées, et n'est pas valorisée.
En outre deux branches d'injection de la solution s concentrée au lieu d'une seule peuvent être utilisées. L'idée est de combiner un injecteur principal 231 qui injecterait de la solution s à température normale, et un injecteur auxiliaire 232 qui injecterait la solution sur-refroidie. Pour cela on « duplique » la branche 214. La branche initiale garde le même fonctionnement que dans l'art antérieur, et c'est la branche auxiliaire 215 qui est refroidie via l'échangeur 32. En effet, il n'est pas nécessaire d'abaisser la température de la totalité de la solution s, mais seulement d'une partie qui serait injectée au dessus du courant principal de solution s à 60°C du conduit 11 pour récupérer la chaleur latente restante qui n'a pas été absorbée par ce courant principal, comme expliqué précédemment. Les injecteurs 231 et 232 sont donc situés l'un au-dessus de l'autre, L'injecteur secondaire 232 étant situé en aval selon le sens de l'écoulement du gaz dans le conduit 21.

Un dispositif de récupération de chaleur selon ce dernier mode de réalisation permet ainsi une efficacité maximale, une énergie minimale étant consommée, et la quasi-intégralité de la chaleur présente dans les gaz rejetés étant absorbée.
De plus, un système à membranes de distillation s'avère simple et peu couteux, et rapidement amorti grâce aux 10 à 20% d'économies supplémentaires réalisables.

## Revendications

1. Dispositif (20) de récupération de chaleur dans un gaz contenant de la vapeur d'eau, le gaz circulant dans un conduit (11), comprenant :
- un circuit principal (21) de solution (s) hygroscopique,
- un moyen (23) d'injection liquide depuis le circuit principal (21) vers le conduit (11), de sorte que la solution (s) hygroscopique se dilue en absorbant la vapeur d'eau du gaz circulant dans le conduit (11),
- un moyen (24) d'extraction liquide depuis le conduit (11) vers le circuit principal (21), de sorte que la solution (s) hygroscopique est injectée dans le circuit (21) après absorption de la vapeur d'eau ;
- un moyen (22) de régénération de la solution (s) hygroscopique disposé sur le circuit principal (21) ;
le dispositif étant **caractérisé en ce qu'**il comprend un moyen (30) de transfert de chaleur surbaissant la température de la solution hygroscopique (s) concentrée avant injection.

2. Dispositif selon la revendication précédente, caractérisé en que le moyen (30) de transfert de chaleur transfère à la solution (s) hygroscopique diluée la chaleur absorbée sur la solution (s) hygroscopique concentrée.

3. Dispositif selon l'une des revendications précédentes, **caractérisé en ce que** le moyen (30) de transfert de chaleur met en prise le circuit principal (21) et un circuit (31) d'eau pure.

4. Dispositif selon la revendication précédente, **caractérisé en ce que** le circuit (31) d'eau pure recycle l'eau fournie par le moyen (22) de régénération.

5. Dispositif selon l'une des revendications 3 à 4, **caractérisé en ce que** le moyen (30) de transfert de chaleur comprend un évapo-absorbeur basse pression.

6. Dispositif selon l'une des revendications 3 à 4, **caractérisé en ce que** le moyen (30) de transfert de chaleur comprend un absorbeur à membranes (301) de distillation.

7. Dispositif selon la revendication précédente, **caractérisé en ce que** ledit absorbeur à membranes de distillation est constitué de canaux alternés de solution (s) hygroscopique et d'eau séparés par des membranes (301) de distillation, les deux fluides étant injectés en sens contraire.

8. Dispositif selon l'une des revendications 5 à 7, caractérisé qu'il comprend un échangeur supplémentaire (32) mettant en prise la solution (s) concentrée, et l'eau pure froide en sortie du moyen (30) de transfert de chaleur.

9. Dispositif selon l'une des revendications précédentes, **caractérisé en ce que** les moyens (23) d'injection comprennent un injecteur principal (231) et un injecteur auxiliaire (232), seule la solution (s) hygroscopique passant par ledit injecteur auxiliaire étant refroidie par le moyen (30) de transfert de chaleur.

10. Dispositif selon la revendication précédente, **caractérisé en ce que** ledit injecteur auxiliaire (232) est situé en aval de l'injecteur principal (231) selon le sens de circulation du gaz dans le conduit (11).

11. Procédé de récupération de chaleur dans un gaz contenant de la vapeur d'eau, le gaz circulant dans un conduit (11), le procédé étant **caractérisé en ce qu'**il comprend les étapes de :
- refroidissement de la solution (s) hygroscopique par un moyen (30) de transfert de chaleur ;
- injection d'une solution (s) hygroscopique refroidie dans le conduit (11), de sorte que la solution (s) hygroscopique se dilue en absorbant la vapeur d'eau du gaz circulant dans le conduit (11) ;
- extraction de la solution (s) hygroscopique depuis le conduit (11) ;
- préchauffage de la solution (s) hygroscopique avec la chaleur absorbée lors de la première étape par le moyen (30) de transfert de chaleur ;
- chauffage de la solution (s) hygroscopique préchauffée au niveau d'un moyen (22) de régénération, de sorte que de la vapeur d'eau s'évapore dans un conduit (26) d'évacuation ;
- condensation de la vapeur d'eau au niveau d'un condenseur (25) mettant en prise le conduit (26) d'évacuation et des moyens (12) de valorisation de chaleur.
